(19) Europäisches Patentamt
European Patent Office
Office européen des brevets

(11) Publication number: **0 647 470 A2**

(12) **EUROPEAN PATENT APPLICATION**

(21) Application number: **94115839.6**

(51) Int. Cl.[6]: **B01J 20/22**

(22) Date of filing: **06.10.94**

(30) Priority: **06.10.93 JP 272936/93**

(43) Date of publication of application:
**12.04.95 Bulletin 95/15**

(84) Designated Contracting States:
**CH DE ES FR GB IT LI SE**

(71) Applicant: **Ajinomoto Co., Inc.**
**No. 15-1, Kyobashi 1-chome**
**Chuo-ku**
**Tokyo (JP)**

(72) Inventor: **Iwatsuki, Makoto, c/o Ajinomoto Co., Ltd.**
**No. 15-1, Kyobashi 1-chome**
**Chuo-ku,**
**Tokyo (JP)**
Inventor: **Hayashi, Toshio**
**No. 60, Koyamashimouchikawara-cho,**
**Kita-ku**
**Kyoto-shi,**
**Kyoto-fu (JP)**

(74) Representative: **Strehl Schübel-Hopf Groening & Partner**
**Maximilianstrasse 54**
**D-80538 München (DE)**

(54) **Adsorbent for beta2-microglobulin.**

(57) An adsorbent is provided, by which $\beta_2$-microglobulin accumulated in the body fluid in patients having renal insufficiency or patients having malignant tumors may be removed safely and effectively, while preventing accidents such as coagulation of blood, clogging of apparatus, etc.

The adsorbent for $\beta_2$-microglobulin is obtained by forming a copolymer composed of neutral amino acid residues, acidic amino acid ester residues and urethane residues into fibers, followed by subjecting the resulting fibers to partial hydrolysis.

EP 0 647 470 A2

## Industrial Field of the Invention

The present invention relates to an adsorbent useful for selectively adsorbing and removing a protein, $\beta_2$-microglobulin, which causes carpal tunnel syndrome, arthropathy, etc., from body fluid such as blood, ascites, fluid in the thoracic cavity, etc.

## Prior Art

It has been clarified that large amounts of the protein $\beta_2$-microglobulin, complexes composed of said protein and other protein(s), and proteins derived from said protein by modifying a part of its amino acid sequence ("$\beta_2$-microglobulin" as referred to herein includes all of these proteins), which cause carpal tunnel syndrome, amyloidosis, arthropathy, osteopathy, etc., accumulate in the body fluid, such as blood, ascites, fluid in the thoracic cavity, etc., in patients having renal insufficiency or patients having malignant tumors, and such patients are increasing in these days.

$\beta_2$-microglobulin is a protein having a molecular weight of about 11,600, which causes various problems since it is hardly removed by conventional blood filtration or dialytic filtration, though needing a large amount of a complemental fluid, and since, if the efficiency of removing it by such conventional means is attempted to be elevated, other useful proteins are removed simultaneously.

Therefore, various polymer adsorbents useful for selectively adsorbing and removing $\beta_2$-microglobulin were developed (see Japanese Patent Laid-Open Application Nos. 62-204761, 62-240068, 62-261367, 2-045065).

In addition, as adsorbents having improved selective adsorbability, those based on a polyamino acid having a porous surface were developed (see Japanese Patent Laid-Open Application Nos. 2-209155, 4-026422, 4-247235, 4-256441).

However, since these are in the form of beads, the adsorbent beads will flow into the blood vessel of a patient who is subjected to hemodialysis and their frequent use may clog the blood vessel. In addition, the apparatus for removing $\beta_2$-microglobulin using adsorbent beads must be fitted with a column having a micro-porous filter by which the beads are prevented from flowing out of the column. When whole blood is passed through the column, it will cause such a trouble that blood cells clog the filter, causing coagulation of the blood. For this reason, it is difficult to apply whole blood to the apparatus. Therefore, the use of the apparatus is limited to the treatment of only plasma that was previously separated from the blood by removing blood cells therefrom. However, the system, in which blood cells are separated from the blood to be treated so as to isolate only plasma therefrom, $\beta_2$-microglobulin is removed from the thus-isolated plasma by adsorption, then the previously-separated blood cells are mixed with the thus-treated plasma, and the mixture is returned back to a patient, has various problems in that it makes the structure of the hemodialytic apparatus more complicated, additionally causing increased pain to the patient. Moreover, the operation of such a complicated apparatus is troublesome.

The above-mentioned problems have not been solved as yet, and there is not known any adsorbent capable of being used safely, practically and easily to selectively adsorb and remove only $\beta_2$-microglobulin.

Problems to be Solved by the Invention

The subject matter of the present invention is to provide an adsorbent for $\beta_2$-microglobulin which has excellent selective adsorbability, which may directly be applied to whole blood, which may be sterilized easily before its use, and which may be used and handled easily.

Means for Solving the Problems

We, the present inventors assiduously studied so as to solve the above-mentioned problems and, as a result, have succeeded in obtaining an adsorbent for $\beta_2$-microglobulin which may directly be applied to whole blood and which has excellent selective adsorbability. Based on this finding, we have completed the present invention. Specifically, the present invention includes the first embodiment and the second embodiment mentioned below.

First embodiment : An adsorbent for $\beta_2$-microglobulin, which is obtained by forming a copolymer composed of neutral amino acid residues, acidic amino acid ester residues and urethane residues into fibers, followed by subjecting the resulting fibers to partial hydrolysis; and

second embodiment : An adsorbent for $\beta_2$-microglobulin, which is obtained by forming a copolymer composed of from 5 to 85 % by weight of neutral amino acid residues, from 10 to 90 % by weight of acidic

amino acid ester residues and from 5 to 85 % by weight of urethane residues into fibers, followed by subjecting the resulting fibers to partial hydrolysis.

The copolymer which is the constitutive requirement common to the first and the second embodiment is composed of neutral amino acid residues, acidic amino acid ester residues and urethane residues.

The neutral amino acid residues include residues of relatively highly-hydrophobic neutral amino acids such as alanine, leucine, valine, phenylalanine, etc. These neutral amino acid residues may be of any form of optically-active D-and L-forms and optically-inactive DL-forms. It is preferred that the forms of these residues in one and the same copolymer are the same.

The acidic amino acid ester residues include residues derived from esters of acidic amino acids, such as $\gamma$-methyl, ethyl and benzyl glutamates, $\beta$-methyl, ethyl and benzyl aspartate, etc. These acidic amino acid ester residues may be of any form of optically-active D- and L-forms and optically-inactive DL-forms. It is preferred that the forms of these residues in one and the same copolymer are the same. It is also preferred that the forms of these acidic amino acid ester residues are the same as those of the above-mentioned, neutral amino acid residues.

The urethane residues include those derived from polyurethane prepolymers having terminal isocyanato groups obtainable by adding an organic isocyanate such as aromatic diisocyanates, aliphatic diisocyanates, alicyclic diisocyanates, etc. to a polyester diol, a polyether diol, a polycarbonate diol, an acyclic lactone diol or a mixture of these diols, to which a low-molecular diol such as ethylene glycol, 1,4-butanediol, etc. has optionally been added; and those derived from polyurethane prepolymers having terminal amino groups obtainable by adding an organic diamine such as aromatic diamines, aliphatic diamines, polyether diamines, etc. to the above-mentioned polyurethane prepolymer having terminal isocyanato groups.

The sequence of the neutral amino acid residues, the acidic amino acid ester residues and the urethane residues in the copolymer molecule is not specifically limited. The copolymer may have any sequences and partial structures formed by random polymerization, block polymerization and random-block polymerization.

The molecular weight of the copolymer is not particularly limited, as long as the copolymer may be formed into shaped bodies, such as fibers. The preferred molecular weight is from 5,000 to 70,000.

To form the copolymer into fibers, various methods may be employed. For instance, mentioned are a method in which a liquid containing the copolymer is jetted out into a coagulation bath so as to coagulate it; a split-fiber method in which the copolymer is formed into a film and the resulting film is split into fibers; etc. The fibers may be any fibers having a simple and uniform, circular cross section, fibers having a modified cross section, fibers having a sea-island-structured cross section, hollow fibers, fibers having a porous structure, suitably twisted or crimped fibers, etc.

Most preferably employed for forming the copolymer into fibers to be used in the present invention is a method of spinning poly-$\alpha$-amino acids (see Japanese Patent Publication No. 43-028787). According to this method, the spinning stock liquid containing the copolymer dissolved therein is spun into fibers, after a liquid which is a poor solvent for the copolymer or an additive which is compatible with the copolymer has been added thereto so as to make the copolymer fibers porous, and thereafter the additive is removed from the fibers by extraction.

The diameter of the copolymer fibers is generally from about 0.1 to 500 m$\mu$, preferably from about 10 to 150 m$\mu$.

The adsorbent for $\beta_2$-microglobulin of the present invention is characterized by having a fibrous form. Due to this characteristic, it is unnecessary to specifically use any fine porous filter when the adsorbent is filled in a column of an apparatus for separating and removing $\beta_2$-microglobulin. Therefore, even when the adsorbent is applied to whole blood using an apparatus fitted with a filter, the filter is not clogged with blood cells and the blood is not coagulated. Accordingly, it is possible to dispose columns each filled with the adsorbent for $\beta_2$-microglobulin of the present invention in series in any conventional hemodialytic apparatus which is widely used in these days. Using the apparatus with the adsorbent of the present invention, therefore, it is possible to alleviate the patients' pain and load and also to evade any troubles in operating the apparatus.

We, the present inventors variously investigated to determine the constitutive contents of the neutral amino acid residues, the acidic amino acid ester residues and the urethane residues constituting the copolymer and, as a result, have found the presence of the preferred ranges of the contents of these constitutive components. On the basis of this finding, we have completed the second embodiment of the invention. According to the second embodiment, a copolymer composed of :

from 5 to 85 % by weight of neutral amino acid residues,
from 10 to 90 % by weight of acidic amino acid ester residues, and
from 5 to 85 % by weight of urethane residues is formed into the intended fibers.

To prepare the copolymer composed of neutral amino acid residues, acidic amino acid ester residues and urethane residues, a neutral amino acid-N-carboxylic acid anhydride ("N-carboxylic acid anhydride" is hereinafter referred to as "NCA") of the chemical formula (1) :

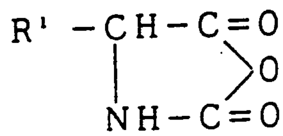

(1)

wherein $R^1$ represents an alkyl group having from 3 to 7 carbon atoms, or a benzyl group, such as phenylalanine-NCA, leucine-NCA, valine-NCA, alanine-NCA, etc., or a mixture of these neutral amino acid-NCA's, and an acidic amino acid ester-NCA of the chemical formula (2):

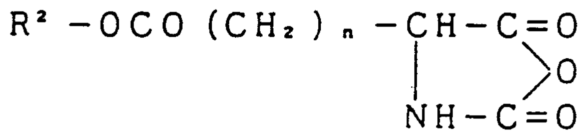

(2)

wherein $R^2$ represents an alkyl group having from 1 to 4 carbon atoms, or a benzyl group, and n represents 1 or 2, such as $\gamma$-methyl glutamate-NCA, $\gamma$-benzyl glutamate-NCA, $\beta$-methyl aspartate-NCA, $\beta$-benzyl aspartate-NCA, etc., or a mixture of these acidic amino acid ester-NCA's, and a polyurethane prepolymer, such as a polyurethane prepolymer having terminal isocyanato groups to be obtained by adding an organic isocyanate such as an aromatic diisocyanate, an aliphatic diisocyanate, an alicyclic diisocyanate, etc. to a polyester diol, a polyether diol, a polycarbonate diol, an acyclic lactone diol or a mixture of these diols, to which a low-molecular diol such as ethylene glycol, 1,4-butanediol, etc. has optionally been added, or a polyurethane prepolymer having terminal amino groups obtainable by adding an organic diamine such as an aromatic diamine, an aliphatic diamine, a polyether diamine, etc. to the above-mentioned polyurethane prepolymer having terminal isocyanato groups, are mixed and polymerized in an organic solvent having no active hydrogen.

The solvent having no active hydrogen, which is used in the polymerization reaction, includes halogen hydrocarbon solvents such as 1,2-dichloroethane, chloroform, methylene chloride, etc.; amide solvents such as N,N-dimethylformamide, formamide, N-methylpyrrolidone, etc.; ketone solvents such as methyl ethyl ketone, acetone, etc.; ether solvents such as dioxane, diglyme, etc.; aromatic solvents such as benzene, toluene, etc.; and ester solvents such as ethyl acetate, butyl acetate, etc. A mixed solvent comprising these may also be employed.

The polymerization temperature is not specifically limited but is suitably from -20 °C to 60 °C, preferably from 10 °C to 50 °C, in consideration of the easiness of controlling the reaction.

The polymerization reaction is finished within 24 h. Generally, a reaction time of 2 to 6 h is sufficient.

The concentration of the mixture of the reactants to be polymerized is preferably from about 3 to 40 %, especially preferably from about 5 to 25 %, at the start of the reaction. If it is too high the viscosity of the mixture is much elevated so that the mixture is difficult to handle. With the proceeding of the reaction, if the viscosity of the reaction mixture increases or if the mixture becomes a gel, the reaction system may be heated to be easily fluidized.

For partially hydrolyzing the ester moieties in the acidic amino ester residues in the thus-obtained fibrous copolymer so as to partially remove the ester moieties therefrom, employable is a method of dipping the fibrous copolymer in a dilute solution of a strong alkali at room temperature for a relatively short period of time. The percentage of the ester moieties to be removed falls within the range of from 10 to 90 mol%, depending on the intended object.

The adsorbent for $\beta_2$-microglobulin of the present invention may be applied essentially in an extracorporeal circulation system. For instance, employable are (1) a method in which the blood taken out from a patient is directly passed through an apparatus containing the adsorbent therein and the thus-treated blood is returned back to the patient; (2) a method in which the blood taken out from a patient is first fractionated into a fraction comprising plasma and a fraction comprising blood cells, only the former fraction comprising plasma is passed through an apparatus containing the adsorbent therein, then the thus-treated fraction is mixed with the previously-fractionated latter fraction comprising blood cells, and thereafter the resulting

mixture is returned to the patient; and (3) a method in which the blood taken out from a patient is passed through a body fluid purifying apparatus such as an artificial kidney, etc., and then it is passed through an apparatus containing the adsorbent therein, or in the opposite order, the blood is first passed through the apparatus containing the adsorbent therein and thereafter passed through a body fluid purifying apparatus such as an artificial kidney, etc.

To pass blood or body fluid through the apparatus according to the methods mentioned above, employable is any of a continuous passing system and a discontinuous passing system, which are selected depending on the clinical necessity.

The fibers can be reused for several times by washing with 0.1N NaOH aqueous solution. However, it is preferable to discard the fibers after the absorption.

Effect of the Invention

As explained hereinabove, since the present invention employs an adsorbent for $\beta_2$-microglobulin which is obtained by forming a copolymer composed of neutral amino acid residues, acidic amino acid ester residues and urethane residues into fibers, followed by subjecting the resulting fibers to partial hydrolysis, it may prevent accidents such as coagulation of blood, clogging of blood vessels or apparatus used, etc. The adsorbent of the present invention may be applied to a conventional body fluid purifying apparatus, thereby safely and effectively removing $\beta_2$-microglobulin accumulated in the body fluid of patients having renal insufficiency or patients having malignant tumors.

Examples

Example 1A:

Example of producing urethane prepolymer having terminal isocyanato groups:

26 parts of isophorone diisocyanate, 0.08 parts of 10 % toluene solution containing di-n-butyl tin dilaurate, TN-12 (product made by Sakai Chemical Co.) and 142 parts of toluene were added to 115 parts of polycarbonate diol having a mean molecular weight of 2000, that had been put in a polymerizer, and reacted at 110 °C for 4 hours, to obtain a urethane prepolymer having terminal isocyanato groups.

About 4 g of the urethane prepolymer were put in an Erlenmeyer flask and accurately weighed, and then dissolved in 10 ml of tetrahydrofuran, then 5 ml of 0.5 N di-n-butylamine/toluene solution were added thereto and stirred for 10 minutes, then 80 ml of methanol were added thereto, and the resulting mixture was titered by neutralization with 0.5 N hydrochloric acid. The control was titered in the same manner. From the titered values of the two, the terminal isocyanato groups were quantitatively determined with the result that the isocyanato value of the urethane prepolymer having terminal isocyanato groups was 0.84 gram-equivalent.

Example 1B:

Example of producing urethane prepolymer having terminal amino groups:

39 g of polypropylene oxide having a mean molecular weight of 2000 and having been aminated at its both terminals, Jeffamine D-2000 (product made by Mitsui Texaco-chemical Co.), that had been put in a polymerizer, were dissolved in 203 g of N,N-dimethylformamide, and 86 g of 50 % (weight/weight % - the same shall apply hereunder) urethane prepolymer solution that had been obtained in Example 1A were gradually added thereto at 25 °C and reacted for 30 minutes, to obtain a urethane prepolymer having terminal amino groups.

About 10 g of the urethane prepolymer were put in an Erlenmeyer flask and accurately weighed, then dissolved in 9 ml of tetrahydrofuran, and the resulting solution was titered by neutralization with 0.05 N hydrochloric acid. The control was titered in the same manner. From the titered values of the two, the terminal amino groups were quantitatively determined with the result that the amine value of the urethane prepolymer having terminal amino groups was 0.060 gram-equivalent.

The actual molecular weights of the polymers of the following examples are:

| | |
|---|---|
| Example 2 | MW = 130,000 |
| Comparative example 1 | MW = 110,000 |
| Comparative example 2 | MW = 160,000 |
| Comparative example 3 | MW = 140,000 |

Example 2:

Example of producing copoly(amino acid urethane) resin from urethane prepolymer having terminal amino acid groups, γ-methyl L-glutamate-NCA, and L-leucine-NCA:

243.3 g of dioxane, 243.3 g of methyl ethyl ketone, 213.3 g of N,N-dimethylformamide and 0.65 g of trimethylamine were added to 40 g of 25 % urethane prepolymer solution obtained in Example 1B, 104.5 g of γ-methyl L-glutamate-NCA and 13.9 g of L-leucine-NCA, and reacted at 10 °C for 30 minutes with stirring, then gradually heated up to 50 °C over a period of 90 min, and further reacted at the elevated temperature for 3 hours still with stirring to complete the polymerization. Thus, a copoly(amino acid derivative urethane) resin solution having a resin concentration of 12 % was obtained.

Comparative Example 1:

Example of producing copoly(amino acid urethane) resin from urethane prepolymer having terminal amino acid groups, and γ-methyl L-glutamate-NCA:

442.0 g of 1,2-dichloroethane, 243.3 g of methyl ethyl ketone and 0.65 g of triethylamine were added to 60 g of 25 % urethane prepolymer solution obtained in Example 1B and 111.0 g of γ-methyl L-glutamate-NCA, and reacted at 25 °C for 3 hours to complete the polymerization. Thus, a copoly(γ-methyl L-glutamate-urethane) resin solution having a resin concentration of 12 % was obtained. The ratio of γ-methyl L-glutamate/urethane was 85/15.

Comparative Example 2:

Example of producing polyamino acid resin from γ-methyl L-glutamate-NCA and L-leucine-NCA:

146.0 g of 1,2-dichloroethane, 243.3 g of methyl ethyl ketone and 0.05 g of N,N-dimethylpropylenediamine were added to 104.6 g of γ-methyl L-glutamate-NCA and 27.8 g of L-leucine-NCA, and stirred at 10 °C for 30 minutes, then gradually heated up to 50 °C over a period of 90 °C, thereafter further heated until the gelled reaction mixture became dissolved during the course of the reaction, and further reacted for 3 hours still with stirring to complete the polymerization. Thus, a polyamino acid resin solution having a resin concentration of 12 % was obtained. The ratio of γ-methyl L-glutamate/L-leucine was 8/2.

Comparative Example 3:

Example of producing poly(γ-methyl L-glutamate) resin:

391 g of N,N-dimethylformamide, 100.0 g of 1,2-dichloroethane, 243.3 g of methyl ethyl ketone and 0.048 g of N,N-dimethylpropylenediamine were added to 130.76 g of γ-methyl L-glutamate-NCA, and stirred at 10 °C for 30 minutes, then gradually heated up to 60 °C over a period of 90 °C, thereafter further heated until the gelled reaction mixture became dissolved during the course of the reaction, and further reacted for 5 hours still with stirring to complete the polymerization. Thus, a poly(γ-methyl L-glutamate) resin solution having a resin concentration of 12 % was obtained.

Example 3a:

Example of spinning copoly(amino acid urethane) resin:

The resin solution obtained in Example 2 was filtered under pressure to remove the insoluble substances therefrom, and this was spun through a nozzle having a pore diameter of 0.4 mm into coagulation bathes under the conditions of: a dope jetting speed of 0.86 ml/min, and a spinning speed of 6.79 m/min. The conditions of the coagulation bathes were as follows: The first bath contained a mixture (1/5) of N,N-dimethylformamide/water; the temperature in the bath was 45 °C, and the length of the bath was 100 cm. The second bath contained water; the temperature in the bath was room temperature, and the

length of the bath was 300 cm.

The thus-spun fibers were kept in a water bath for 24 hours and then dried in air.

Example 3b:

Example of spinning copoly(amino acid derivative urethane) resin:

The resin solution obtained in Comparative Example 2 was treated in the same manner as in Example 3a and spun into coagulation bathes under the same conditions as in Example 3a. The thus-spun fibers were kept in a water bath for 24 hours and then dried in air.

Example 3c:

Example of spinning polyamino acid resin:

The resin solution obtained in Comparative Example 3 was treated in the same manner as in Example 3a and spun into coagulation bathes under the same conditions as in Example 3a. The thus-spun fibers were kept in a water bath for 24 hours and then dried in air.

Example 3d:

Example of spinning copoly(amino acid urethane) resin:

The resin solution obtained in Comparative Example 1 was treated in the same manner as in Example 3a and spun into a coagulation bath under the same conditions as in Example 3a. The conditions of the coagulation bath were as follows: The bath contained xylene; the temperature in the bath was room temperature; and the length of the bath was 300 cm. The thus-spun fibers were kept in a water bath for 24 hours and then dried in air.

Example 4:

Example of partially hydrolyzing spun fibers:

The fibers obtained in Example 3a to Example 3d each were dipped in a partially-hydrolyzing bath of 20 times by weight relative to the fibers, at 25 °C for 10 minutes, 20 minutes or 30 minutes, the bath containing 1.3 molar times, relative to the γ-methyl L-glutamate residues constituting the fibers, of sodium hydroxide dissolved therein. The composition of the partially-hydrolyzing bath comprised methanol/isopropanol/water at a ratio of 2/2/1 by volume. After thus dipped, the fibers were neutralized with a diluted hydrochloric acid to have pH of 4 or less. Then, the fibers were taken out, washed with water at pH of 4 and dried in air.

The thus partially-hydrolyzed fibers were subjected to solid C13-nuclear magnetic resonance to determine the existing ratio of the methoxy groups derived from the γ-methyl L-glutamate residues in the side chains. From the thus-measured data, the percentage of the partial hydrolysis of the ester was calculated. Table 1 shows the percentage of the partial hydrolysis thus obtained.

Table 1

| Test No. | Fibers Tested | Time for Partial Hydrolysis (min) | Percentage of Partial Hydrolysis (mol%) |
|---|---|---|---|
| 1 | Fibers obtained by partially hydrolyzing copolymer having L-leucine residues, γ-methyl L-glutamate residues and urethane residues | 10 | 22 |
| 2 | | 20 | 45 |
| 3 | | 30 | 58 |
| 4 | Fibers obtained by partially hydrolyzing copolymer having copoly(γ-methyl L-glutamate/urethane) residures | 10 | 25 |
| 5 | | 20 | 53 |
| 6 | | 30 | Fibers were broken. |
| 7 | Fibers obtained by partially hydrolyzing copolymer having copoly(γ-methyl L-glutamate/L-leucine) residues | 10 | 19 |
| 8 | | 20 | 23 |
| 9 | | 30 | 49 |
| 10 | Fibers obtained by partially hydrolyzing copolymer having poly(γ-methyl L-glutamate) residues | 10 | 29 |
| 11 | | 20 | 48 |
| 12 | | 30 | Fibers were broken. |

Example 5:

Example of testing absorption of $\beta_2$-microglobulin by partially-hydrolyzed fibers, using serum component model test liquid:

Considering the actual composition of blood, a serum component model test liquid comprising the

components shown in Table 2 was prepared.

Table 2

| High $\beta_2$-microglobulin-content serum component model | |
|---|---|
| Components | Content |
| Human serum albumin<br>Human $\gamma$-globulin<br>Human heparin<br>Human $\beta_2$-microglobulin<br>Physiological saline solution | 3.5%<br>0.80%<br>25 U/ml<br>10 to 20 mg/liter<br>pH 7.4 |
| U:unit | |

Adsorption Test:

A test liquid circulating method using a column-filled system was employed. Precisely, 50 mg of the adsorbent comprising the partially-hydrolyzed fibers, that had obtained in Example 4, were filled in a column having an inner diameter of 5 mm and a length of 100 mm so that the adsorbent was fixed to the inner wall of the column at some positions. 30 ml of a physiological saline solution containing 20 U/ml of heparin were circulated in the column at a flow rate of 15 ml/min for 2 minutes, using a peristaltic pump. After the physiological saline solution was removed, 30 ml of the test liquid was circulated in the column at a flow rate of 15 ml/min for 30 minutes, also using the peristaltic pump. The temperature for the adsorption test was 37 °C. As the control test, the same test liquid was circulated in the column filled with glass fibers in place of the adsorbent fibers, the glass fibers having almost the same fineness as the adsorbent fibers.

Measurement of adsorbed amounts of serum components:

After the adsorption process, the amounts of $\beta_2$-microglobulin, albumin, $\gamma$-globulin, heparin and globulin debris (IgG, IgA, IgM, IgD) remained in the test liquid were measured, from which the amount of non-equilibrium adsorption (the amount remained after adsorption) of each component was calculated. The methods for the determination were as follows: To determine $\beta_2$-microglobulin and globulin debris, used was latex-coagulation immunoassay; to determine albumin, used was immunonephelometry; $\gamma$-globulin was calculated from AGC determined by BCG-buret assay; and heparin was determined by a method of using a coloring synthetic substrate.

Table 3 shows the results of the measurement of the amounts of the non-adsorbed serum components. In Table 3, Test Nos. 1 to 3 used the adsorbent that had been obtained by forming the copolymer composed of neutral amino acid residues, acidic amino acid ester residues and urethane residues into fibers followed by partially hydrolyzing the resulting fibers. It is known from Table 3 that the selective adsorption and removal of $\beta_2$-microglobulin by the adsorbent in Test Nos. 1 to 3 was significant.

Table 3 - Results of test for selective adsorption of $\beta_2$-microglobulin from serum model, using various adsorbents (Amount not adsorbed but remained)

| Component | Serum Albumin(mg/dl) | γ-globulin(mg/dl) | Heparin(U/ml) | $\beta_2$-microglobulin(μg/liter) |
|---|---|---|---|---|
| Control | 3510 | 799 | 25 | 13300 |
| 1 | 3510 | 799 | 25 | 823 |
| 2 | 3510 | 799 | 25 | 304 |
| 3 | 3510 | 799 | 25 | 547 |
| 4 | 3508 | 797 | 16 | 11850 |
| 5 | 3508 | 797 | 17 | 10960 |
| 6 | - | - | - | - |
| 7 | 3508 | 796 | 18 | 12641 |
| 8 | 3508 | 796 | 18 | 12831 |
| 9 | 3509 | 796 | 18 | 12487 |
| 10 | 3510 | 798 | 20 | 9978 |
| 11 | 3510 | 798 | 19 | 9861 |
| 12 | - | - | - | - |

In Test No. 6 and Test No. 12, the measurement was impossible as the fibers were broken.

Example 6:

Example of testing absorption of $\beta_2$-microglobulin by partially-hydrolyzed fibers, using whole blood to which $\beta_2$-microglobulin had been added:

To 30 ml of each of fresh human whole blood A and fresh human whole blood B, added were 20 U/ml-(blood) of heparin. Then, $\beta_2$-microglobulin was added thereto to have a concentration of 10 to 20 mg/liter. These two test bloods were separately applied to a column filled with the adsorbent fibers obtained in Example 4, thereby determining the amounts of the adsorbed serum components according to the same, test liquid circulation method using the filled column, as that in Example 5. To determine the amounts of the adsorbed serum components, the same methods as those in Example 5 were employed. As the control test, the same, $\beta_2$-microglobulin-added whole bloods A and B were separately circulated in the column filled with glass fibers in place of the adsorbent fibers, the glass fibers having almost the same fineness as the adsorbent fibers.

Table 4 shows the results of the measurement of the amounts of the non-adsorbed serum components. In Table 4, the amount of the remained $\beta_2$-microglobulin in the whole blood A and the whole blood B that had been applied to the column filled with the adsorbent fibers of the present invention was significantly lower than that in the whole blood A and the whole blood B that had been applied to the column filled with the control adsorbent. From the test results, it is known that the adsorbent of the present invention to be obtained by forming a copolymer composed of neutral amino acid residues, acidic amino acid ester residues and urethane residues into fibers followed by partially hydrolyzing the resulting fibers selectively and significantly adsorbed and removed $\beta_2$-microglobulin from the test bloods. Neither coagulation of the test blood nor clogging of the circulation system occurred in the circulation system having therein the adsorbent fibers of the present invention.

Table 4 - Results of test for selective adsorption of $\beta_2$-microglobulin from $\beta_2$-microglobulin-added human whole blood, using partial hydrolysate of copolymer fibers having amino acid residues and urethane residues (Amount not adsorbed but remained)

| Components | | Albumin (mg/dl) | Globulin (mg/dl) | | | | $\beta_2$-microglobulin (μg/liter) |
|---|---|---|---|---|---|---|---|
| | | | IgG | IgA | IgM | IgG | |
| Whole Blood A | Control | 4570 | 1170 | 338 | 114 | 0.7 | 17500 |
| | Test | 4575 | 1170 | 390 | 116 | 0.9 | 412 |
| Whole Blood B | Control | 4382 | 980 | 316 | 90 | 1.8 | 19500 |
| | Test | 4391 | 1080 | 357 | 92 | 1.9 | 435 |

IgG: Immunoglobulin G, IgA: Immunoglobulin A

IgM: Immunoglobulin M, IgD: Immunoglobulin D

Test: The adsorbent of this invention was used.

Advantage of the Invention

As described in the above, the present invention is effective in preventing accidents, such as coagulation of blood, clogging of apparatus, etc., in treating blood. The adsorbent of the present invention may be applied to conventional body fluid-purifying apparatus, thereby safely and effectively removing $\beta_2$-

microglobulin accumulated in the body fluid in patients having renal insufficiency or patients having malignant tumors.

**Claims**

1. An adsorbent for $\beta_2$-microglobulin, which is a copolymer composed of units of neutral amino acids, units of acidic amino acid esters and urethane units, which copolymer has been partially hydrolyzed.

2. An adsorbent for $\beta_2$-microglobulin according to claim 1, which is a copolymer composed of 5 to 85 wt.-% of the units of neutral amino acids, 10 to 90 wt.-% of the units of acidic amino acid esters and 5 to 85 wt.-% of urethane units, which copolymer has been partially hydrolyzed.

3. An adsorbent for $\beta_2$-microglobulin according to claim 1 or claim 2, which is in the form of shaped bodies.

4. An adsorbent for $\beta_2$-microglobulin according to claim 3, which is in the form of fibers.

5. A process for producing an adsorbent for $\beta_2$-microglobulin according to any of the claims 1 to 4, which comprises producing a random, block or random-block copolymer of neutral amino acids, acidic amino acid esters, and polyurethane prepolymers, optionally forming shaped bodies from the copolymer and subjecting the copolymer or the shaped bodies produced therefrom to partial hydrolysis.

6. A process according to claim 5, wherein the shaped bodies are fibers.